# EUROPEAN PATENT SPECIFICATION

(11) **EP 1 914 985 B1**
(45) Date of publication and mention of the grant of the patent: **14.12.2011**
(21) Application number: 07112354.1
(22) Date of filing: 12.07.2007
(51) Int. Cl.: H04N 5/44, H03M 11/00

(54) **Video playing apparatus and method of controlling volume in video playing apparatus**
Videowiedergabevorrichtung und Verfahren zum Steuern der Lautstärke der Videowiedergabevorrichtung
Appareil de lecture vidéo et procédé pour le contrôle du volume dans un appareil de lecture vidéo

(30) Priority: 12.10.2006 KR 20060099382
(43) Date of publication of application: 23.04.2008
(73) Proprietor: Samsung Electronics Co., Ltd., Gyeonggi-do 442-742 (KR)
(72) Inventor: Park, Bong-hwan, Taean-gu Hwaseong-si Gyeonggi-do (KR)
(74) Representative: Walaski, Jan Filip

(56) References cited:
- EP-A- 0 999 704
- JP-A- 4 233 875
- JP-A- 2000 068 765
- US-A1- 2006 050 899

## Description

Apparatuses and methods consistent with the present invention relate to controlling a sound volume of video being played, and more particularly, to controlling a sound volume of video being played according to whether a predetermined key is successively input.

A television (TV) receives a broadcast from a broadcast station, separates the received broadcast into video and audio signals, and displays the video signal through a screen while outputting audio signal through a speaker.

A TV is generally provided with an audio mute function, which blocks the audio signal from outputting such that the video signal is displayed without sound.

The audio mute function may be used when it is necessary to turn down the volume of the TV immediately. A user can completely block the output of the audio signal using a mute key, without having to repeatedly press a volume adjusting key and gradually decreasing the volume.

When the audio is being played, the output of the audio signal through the speaker can be blocked by pressing the mute key. Generally, the volume of the sound is retained when the audio output is blocked.

Therefore, the audio output through the speaker is resumed at the same volume as before the mute mode, when the mute key is re-pressed.

The mute mode may be released automatically, in response to a volume adjusting key, and in this situation, the audio is at the volume set before the mute mode. In other words, a user cannot adjust the volume of audio sound in the mute mode.

Accordingly, the user experiences inconvenience. Because the user is unable to adjust the volume of the audio in the mute mode, the audio may be played too loud when the mute mode is released in response to the volume adjusting key or the mute key.

Furthermore, because the volume of the TV is retained and the TV may be too loud when the user turns on the TV, people around the TV, including the user, experience inconvenience until the user finally turns down the volume.

US 2006/0050899 discloses a volume adjusting system wherein, if a user continuously presses a key for decreasing a volume for more than a predetermined period of time, a mute function is activated.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method of adjusting a sound volume of a video playing apparatus which outputs a video and an audio, according to claim 1.

The adjusting the current sound volume to the predetermined level may include displaying a message which indicates that the current sound volume is adjusted to a predetermined level.

The adjusting the current sound volume to the predetermined level may include displaying the predetermined level as the current sound volume on a user interface screen which displays the sound volume.

The adjusting the current sound volume to the predetermined level may be performed even when the video playing apparatus is in power-off state.

The present invention also provides a video playing apparatus which outputs a video and an audio, according to claim 10.

The predetermined key may be a mute key.

The predetermined sound volume may be no sound.

The predetermined period of time may be one second.

A memory may be further provided, and the control unit may control such that the predetermined sound volume is set in the memory as the latest sound volume.

A display unit may be further provided, and the control unit may control the display unit to display a message which indicates that the current sound volume is adjusted to a predetermined level. Alternatively, the control unit may control the display unit to display the predetermined level as the current sound volume on a user interface screen which displays the sound volume.

The control unit may adjust the sound volume even when the video playing apparatus is in power-off state.

The above and/or other aspects of the present invention will be more apparent by describing certain exemplary embodiments of the present invention with reference to the accompanying drawings, in which:
Figure 1 is a control block diagram of a video playing apparatus according to an exemplary embodiment of the present invention;
Figure 2 illustrates an On-Screen Display (OSD) screen according to an exemplary embodiment of the present invention;
Figure 3 illustrates an OSD screen according to another exemplary embodiment of the present invention;
Figure 4 is a flowchart illustrating a method of adjusting a sound volume according to an exemplary embodiment of the present invention; and
Figure 5 is a flowchart illustrating a method of adjusting a sound volume according to another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as a detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

In one exemplary embodiment, a video playing apparatus 1 may be implemented as a digital TV.

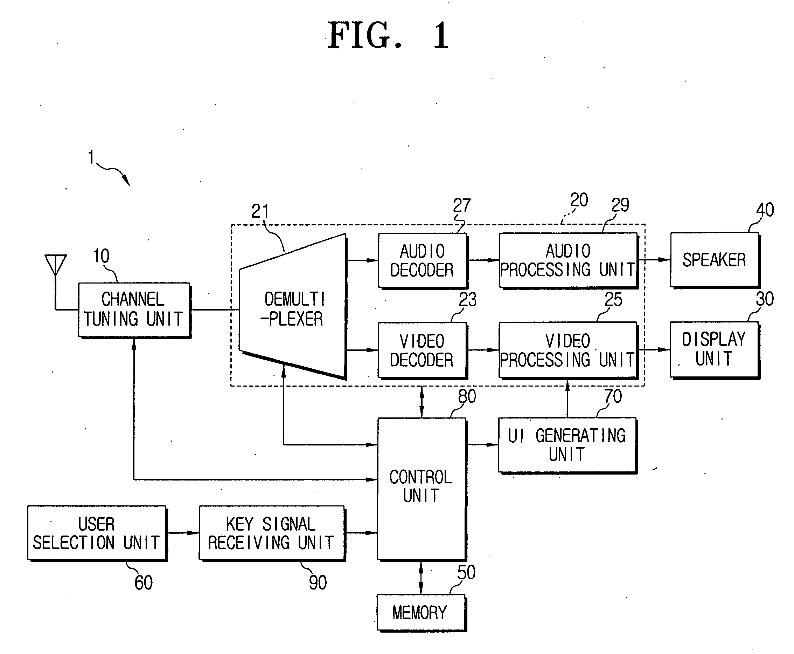

Figure 1 is a control block diagram of a digital TV 1 as the video playing apparatus according to an exemplary embodiment of the present invention. The digital TV 1 may include a channel tuning unit 10, a signal processing unit 20, a display unit 30, a speaker 40, a memory 50, a user selection unit 60, a UI generating unit 70, a control unit 80, and a key signal receiving unit 90.

The channel tuning unit 10 may include a tuner which tunes to a broadcast being received over the antenna, and a demodulator which conducts processing such as demodulation and error correction of the tuned broadcast and outputs the broadcast in the form of a transport stream (TS). The channel tuning unit 10 may tune to the broadcast at a frequency band which corresponds to a control signal of the control unit 80, which will be explained in greater detail below.

The signal processing unit 20 may include a demultiplexer 21, a video decoder 23, a video processor 25, an audio decoder 27, and an audio processor 29.

The broadcast is demodulated at the channel tuning unit 10 and separated into a video signal, an audio signal, and additional data defined by the program and service information protocol (PSIP) at the demultiplexer 21, and output in the form of a bit stream.

The video signal being separated at the demultiplexer 21 is decoded at the video decoder 23, and converted at the video processor 25 to conform to the output specifications of the display unit 30 such as vertical frequency, resolution, aspect ratio, and the like. The video processor 25 may include a scaler.

The display unit 30 is adaptable to various display modules, including Digital Lighting Processing (DLP), Liquid Crystal Display (LCD), and Plasma Display Panel (PDP).

The audio signal being separated at the demultiplexer 21 is decoded at the audio decoder 27, and volume of the sound is adjusted at the audio processor 29, such that the adjusted audio signal is output through the speaker 40.

The additional data under PSIP being separated at the demultiplexer 21 may include EPG data, the guide information of the broadcast programs.

The user selection unit 60 may include a remote controller having a function of sound volume adjustment, and the remote controller may have a mute key and a key signal generator which generates a key signal in response to a manipulation on the key. In alternate embodiments, the user selecting unit 60 may include a mouse, a keyboard, or may be incorporated into a panel on the TV.

The key signal receiving unit 90 may receive a key signal being output from the user selecting unit 60 and transmit the received key signal to the control unit 80.

The digital TV 1 according to an aspect of the exemplary embodiment of the present invention may additionally include the UI generating unit 70. The UI generating unit 70 operates to generate an OSD including a message which notifies that the current volume has been adjusted to a predetermined level. The UI generating unit 70 may be implemented by use of an OSD generating integrated circuit (IC). The OSD being generated at the UI generating unit 70 may be processed at the video processing unit 25 and displayed at the display unit 30. The OSD being generated at the UI generating unit 70 may include an OSD which notifies the specific level of volume of the digital TV 1.

The control unit 80, upon receiving a signal corresponding to a mute key via the user selecting unit 60, controls the respective components to perform designated functions. The control unit 80 may be implemented as a micro processor, a Central Processing Unit (CPU), or the like.

More specifically, in response to a signal corresponding to the mute key being received at the key signal receiving unit 90 via the user selection unit 60, the control unit 80 determines whether the signal is being received more than a predetermined period of time, i.e., one second.

If it is determined that the mute key has been pressed for more than one second, that is, if the mute key is determined to have been continuously input more than one second, the control unit 80 may cause the current volume to be adjusted to a predetermined volume, such as, 0 (i.e., no sound). The control unit 80 may control the audio processing unit 29 in accordance with the adjusted volume such that the audio is output through an audio output unit such as the speaker 40 at the adjusted volume. The control unit 80 may control the audio processing unit 90 so that the audio is blocked from being output through the speaker 40.

If the mute key is not continuously pressed, the control unit 80 performs the ordinary operation of the mute key.

Accordingly, the control unit determines whether it is in mute mode. If it is determined that it is not in the mute mode and that the audio is currently being output, the control unit enters into the mute mode. According to the entry into the mute mode, the control unit 80 controls the audio output so that it is blocked while the current volume is retained.

If the mute key is pressed and it is the mute mode, that is, where the audio is not being output, the control unit 80 causes the mute mode to be released. That is, the control unit 80 may cause the audio to be output at the latest volume.

The memory 50 always stores the latest volume. Accordingly, if the control unit 80 causes the current volume to be adjusted to 0, the memory 50 stores 0 as the latest volume.

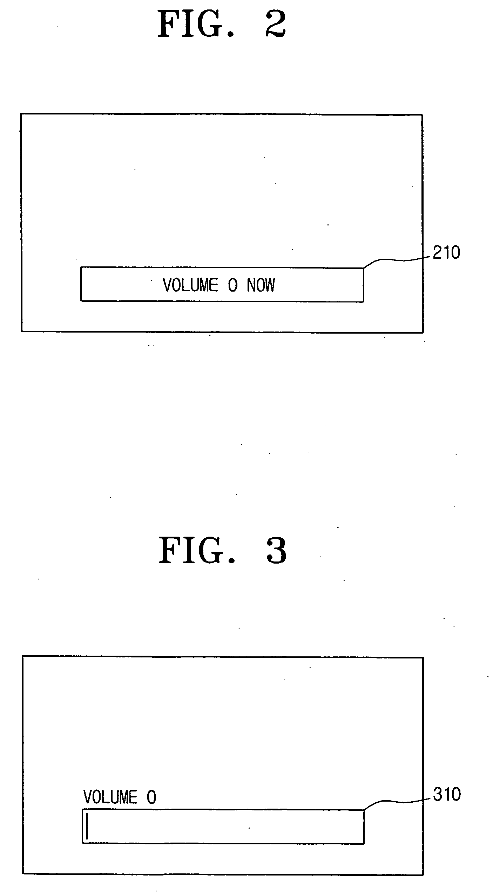

Figure 2 illustrates an example where the current volume has been adjusted to 0 by the control unit 80, and the control unit 80 controls the display unit 30 so that it indicates a message "VOLUME 0 NOW", which means that the current volume has been adjusted to 0.

Figure 3 illustrates an alternative example where the control unit 80 controls the display unit 30 to indicate 0 through a user interface screen.

The video playing apparatus 1 according to an exemplary embodiment of the present invention may receive a signal of a predetermined key and accordingly adjust the volume, even when it is turned off.

Because the volume of the TV can be adjusted to 0 by pressing a mute key for more than one second when the TV (i.e., video playing apparatus 1) is in an off state, user discomfort due to an unexpectedly loud sound of the TV when the user turns the TV on, can be avoided.

In another exemplary implementation, the video playing apparatus 1 may perform the same volume adjustment that is provided when the video playing apparatus 1 is activated in response to a mute key pressed more than one second as a part of the initialization process of the video playing apparatus 1. In this way, the user's inconvenience can be avoided because the user does not have to turn on the video playing apparatus 1 by pressing a power key, and then press the mute key more than one second to lower the volume.

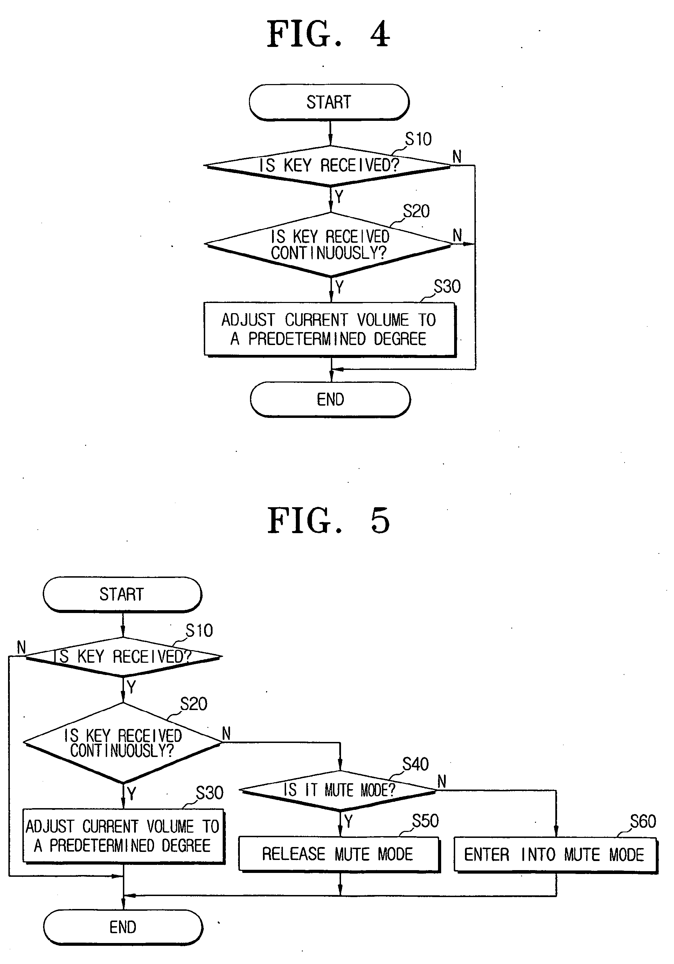

The volume adjusting method of a video playing apparatus according to an exemplary embodiment of the present invention will be explained below with reference to FIGURE 4.

First, it is determined whether a signal corresponding to a predetermined key is received (S10). The predetermined key may comprise a mute key. Upon determining that the signal corresponding to predetermined key is received at operation S10, it is determined whether the signal is continuously received for more than a predetermined period of time (S20). In other words, it is determined whether the predetermined key is pressed continuously. The predetermined period of time may desirably be one second.

If it is determined at operation S20 that the signal is continuously received for more than the predetermined period of time, that is, if it is determined that the key is being pressed continuously, the current volume is adjusted to a predetermined level (S30). The predetermined level may desirably be 0 (i.e., no sound). As a result, audio output through the speaker 40 may be blocked.

The predetermined volume level 0 may be stored as the latest volume.

As shown in Figure 2, a message may be displayed to indicate that the volume has been adjusted to a predetermined level.

Alternatively, the currently volume may be displayed through the user interface screen, as shown in Figure 3.

A method of adjusting the volume of the video playing apparatus according to another exemplary embodiment of the present invention will now be explained below with reference to Figure 5.

The volume adjusting method may include operations S10 to S30 of the above exemplary embodiment, and operations S10 to S30 will not be explained below for the sake of brevity. At operation S20, if it is determined that the signal is not received continuously, that is, if it is determined that the key is input briefly, it is determined whether it is currently a mute mode (S40).

Upon determining it to be the mute mode at operation S40, that is, upon determining that no audio is being output currently, the mute mode is released (S50). Audio can be output at the latest volume when the mute mode is released. Additionally, the mute OSD is not displayed any more, when the mute mode is released.

Upon determining that it is not the mute mode and that audio is being output currently at operation S40, the video playing apparatus enters into the mute mode (S60). Upon entering into the mute mode, audio output through the speaker 40 is blocked, but the current volume is retained. Additionally, a mute OSD may be displayed on the display unit 30 to indicate that it is mute mode.

With the volume adjusting method according to the exemplary embodiment of the present invention, a signal corresponding to the predetermined key may be received and the volume can be adjusted to a predetermined level, even when the video playing apparatus is in the off state.

More specifically, the volume can be adjusted to 0 by pressing the mute key for more than one second, when the TV is in the off state. Because the volume of the TV can be adjusted even when the TV is in the off state, user discomfort due to unexpectedly loud sound of the TV when the user turns it on, can be avoided.

Although the digital TV was explained above according to one exemplary embodiment of the present invention, one will understand that the present invention can be incorporated into other video playing apparatuses which receive signal corresponding to a mute key and adjust the volume. For example, the present invention may apply to a set top box.

Furthermore, although the digital TV was explained above as receiving a broadcast according to one exemplary embodiment of the present invention, one will understand that the digital TV may receive a signal from an external device and output the received signal.

Furthermore, although the video playing apparatus was explained above as being adjusted to volume 0 in the exemplary embodiment of the present invention, one will understand that the level of adjustment may vary in a range that is audible and not unpleasantly loud for the viewers.

Furthermore, although the predetermined key was explained as being pressed more than 1 second in the exemplary embodiment of the present invention, one will understand that the period of time may vary to, for example, three seconds, if viewers feel it more convenient.

As explained above, according to the exemplary embodiments of the present invention, a volume of a video playing apparatus can be adjusted in a mute mode by pressing a predetermined key continuously.

Additionally, the volume of the video playing apparatus can be adjusted to a desirable level before the mute mode is released so that user can turn down the volume if the video playing apparatus was played at a loud volume before entering into the mute mode.

Furthermore, the volume of the video playing apparatus can be adjusted in a standby mode, that is, in power-off state, so that user discomfort due to unexpected loudness of the apparatus when the apparatus is turned on, can be avoided.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method of adjusting a sound volume of a video playing apparatus which outputs a video and an audio, the method comprising:
receiving a signal corresponding to activation of a key; and
determining whether the signal is received continuously for at least a predetermined period of time; **characterised by**
updating a current sound volume level to be a predetermined level and storing the updated current sound volume level in a memory (50) if it is determined that the signal is received continuously for the predetermined period of time and outputting an audio according to the updated level.

2. The method of claim 1, wherein the predetermined level is a preset level stored in the apparatus which is independent of the period of time for which the signal is received, provided the period is at least the predetermined period.

3. The method of claim 1 or 2, wherein the key comprises a mute key.

4. The method of any one of the preceding claims, wherein the predetermined sound volume level is no sound.

5. The method of any one of the preceding claims, wherein the predetermined period of time comprises 1 second.

6. The method of any one of the preceding claims, wherein the updating the sound volume level to the predetermined level comprises displaying a message which indicates that the stored current sound volume level has been updated to the predetermined level.

7. The method of any one of the preceding claims, wherein the updating the current sound volume level to the predetermined level comprises displaying the predetermined level as the stored current sound volume level on a user interface screen which displays sound volume.

8. The method of any one of the preceding claims, wherein the updating the current sound volume level to the predetermined level is performed even if the video playing apparatus is in a power-off state.

9. The method of any one of the preceding claims, wherein if the video playing apparatus is in a power off state, if the signal is received continuously for at least the predetermined time, the apparatus is switched to an on state with an output volume at the updated level.

10. A video playing apparatus which outputs a video and an audio, the video playing apparatus comprising:
a key signal receiving unit (90) configured to receive a signal corresponding to a key;
a control unit (80) configured to determine whether the signal is received continuously for at least a predetermined period of time; and
an audio output unit which outputs an audio signal, **characterised in that** the control unit (80) is configured to update a current sound volume level to be a predetermined level and store the updated current sound volume level in a memory (50) if it is determined that the signal is received continuously for at least the predetermined period of time, and control the audio output unit to output the audio signal at the updated level.

11. The video playing apparatus of claim 10, wherein the key comprises a mute key.

12. The video playing apparatus of claim 10 or 11, wherein the predetermined level is no sound.

13. The video playing apparatus of any one of claims 10 to 12, wherein the predetermined period of time is one second.

14. The video playing apparatus of any one of claims claims 10 to 13, further comprising a display unit (30), wherein the control unit (80) controls the display unit (30) such that the display unit (30) displays a message which indicates that the stored current sound volume level has been updated.

15. The video playing apparatus of any one of claims 10 to 14, further comprising a display unit (30), wherein the control unit (80) is configured to control the display unit (30) such that the display unit (30) displays the stored current sound volume level on a user interface screen.

16. The video playing apparatus of any one of claims 10 to 15, wherein the control unit (30) is configured to update the stored current sound volume level even if the video playing apparatus is in a power-off state.

## Patentansprüche

1. Verfahren zum Einstellen einer Lautstärke einer Videowiedergabevorrichtung, die ein Video und ein Audio ausgibt, wobei das Verfahren Folgendes umfasst:
Empfangen eines Signals, das der Aktivierung einer Taste entspricht; und
Bestimmen, ob das Signal kontinuierlich für mindestens einen vorher festgelegten Zeitraum empfangen wird; **gekennzeichnet durch**
Aktualisieren eines aktuellen Lautstärkepegels auf einen vorher festgelegten Pegel und Speichern des aktualisierten aktuellen Lautstärkepegels in einem Speicher (50), wenn bestimmt wird, dass das Signal kontinuierlich für den vorher festgelegten Zeitraum empfangen wird, und Ausgeben eines Audios entsprechend dem aktualisierten Pegel.

2. Verfahren nach Anspruch 1, wobei der vorher festgelegte Pegel ein voreingestellter Pegel ist, der in der Vorrichtung gespeichert ist und von dem Zeitraum unabhängig ist, für den das Signal empfangen wird, vorausgesetzt, dass der Zeitraum mindestens der vorher festgelegte Zeitraum ist.

3. Verfahren nach Anspruch 1 oder 2, wobei die Taste eine Stummtaste umfasst.

4. Verfahren nach einem der vorhergehenden Ansprüche, wobei der vorher festgelegte Lautstärkepegel kein Ton ist.

5. Verfahren nach einem der vorhergehenden Ansprüche, wobei der vorher festgelegte Zeitraum 1 Sekunde umfasst.

6. Verfahren nach einem der vorhergehenden Ansprüche, wobei das Aktualisieren des Lautstärkepegels auf den vorher festgelegten Pegel das Anzeigen einer Nachricht umfasst, die darauf hinweist, dass der gespeicherte aktuelle Lautstärkepegel auf den vorher festgelegten Pegel aktualisiert wurde.

7. Verfahren nach einem der vorhergehenden Ansprüche, wobei das Aktualisieren des aktuellen Lautstärkepegels auf den vorher festgelegten Pegel das Anzeigen des vorher festgelegten Pegels als der gespeicherte aktuelle Lautstärkepegel auf einem Benutzeroberflächenbildschirm umfasst, der die Lautstärke anzeigt.

8. Verfahren nach einem der vorhergehenden Ansprüche, wobei das Aktualisieren des aktuellen Lautstärkepegels auf den vorher festgelegten Pegel durchgeführt wird, selbst wenn die Videowiedergabevorrichtung sich in einem Aus-Zustand befindet.

9. Verfahren nach einem der vorhergehenden Ansprüche, wobei, wenn die Videowiedergabevorrichtung sich in einem Aus-Zustand befindet, wenn das Signal kontinuierlich für mindestens die vorher festgelegte Zeit empfangen wird, die Vorrichtung in einen Ein-Zustand mit einem Ausgabevolumen auf dem aktualisierten Pegel geschaltet wird.

10. Videowiedergabevorrichtung, die ein Video und ein Audio ausgibt, wobei die Videowiedergabevorrichtung Folgendes umfasst:
eine Tastensignalempfangseinheit (90), die dazu eingerichtet ist, ein Signal zu empfangen, das einer Taste entspricht;
eine Steuereinheit (80), die dazu eingerichtet ist, zu bestimmen, ob das Signal kontinuierlich für mindestens einen vorher festgelegten Zeitraum empfangen wird; und
eine Audioausgabeeinheit, die ein Audiosignal ausgibt, **dadurch gekennzeichnet, dass** die Steuereinheit (80) dazu eingerichtet ist, einen aktuellen Lautstärkepegel auf einen vorher festgelegten Pegel zu aktualisieren und den aktualisierten aktuellen Lautstärkepegel in einem Speicher (50) zu speichern, wenn bestimmt wird, dass das Signal kontinuierlich für mindestens den vorher festgelegten Zeitraum empfangen wird, und die Audioausgabeeinheit dahingehend zu steuern, das Audiosignal auf dem aktualisierten Pegel auszugeben.

11. Videowiedergabevorrichtung nach Anspruch 10, wobei die Taste eine Stummtaste umfasst.

12. Videowiedergabevorrichtung nach Anspruch 10 oder 11, wobei der vorher festgelegte Pegel kein Ton ist.

13. Videowiedergabevorrichtung nach einem der Ansprüche 10 bis 12, wobei der vorher festgelegte Zeitraum eine Sekunde ist.

14. Videowiedergabevorrichtung nach einem der Ansprüche 10 bis 13, die weiterhin eine Anzeigeeinheit (30) umfasst, wobei die Steuereinheit (80) die Anzeigeeinheit (30) so steuert, dass die Anzeigeeinheit (30) eine Nachricht anzeigt, die darauf hinweist, dass der gespeicherte aktuelle Lautstärkepegel aktualisiert wurde.

15. Videowiedergabevorrichtung nach einem der Ansprüche 10 bis 14, die weiterhin eine Anzeigeeinheit (30) umfasst, wobei die Steuereinheit (80) dazu eingerichtet ist, die Anzeigeeinheit (30) so zu steuern, dass die Anzeigeeinheit (30) den gespeicherten aktuellen Lautstärkepegel auf einem Benutzeroberflächenbildschirm anzeigt.

16. Videowiedergabevorrichtung nach einem der Ansprüche 10 bis 15, wobei die Steuereinheit (30) dazu eingerichtet ist, den gespeicherten aktuellen Lautstärkepegel zu aktualisieren, selbst wenn die Videowiedergabevorrichtung sich in einem Aus-Zustand befindet.

## Revendications

1. Procédé de réglage d'un volume sonore d'un appareil de lecture vidéo qui produit en sortie un signal vidéo et un signal audio, le procédé comprenant les étapes consistant
à :
recevoir un signal correspondant à l'activation d'une touche ; et
déterminer si le signal est reçu continûment ou non pendant au moins une période de temps prédéterminée ; **caractérisé par**
l'actualisation d'un niveau de volume sonore courant à un niveau prédéterminé et la mémorisation du niveau de volume sonore courant actualisé dans une mémoire (50) s'il est déterminé que le signal est reçu continûment pendant la période de temps prédéterminée et la production en sortie d'un signal audio en fonction du niveau actualisé.

2. Procédé selon la revendication 1, dans lequel le niveau prédéterminé est un niveau préétabli mémorisé dans l'appareil qui est indépendant de la période de temps pendant laquelle le signal est reçu, à condition que la période soit au moins la période prédéterminée.

3. Procédé selon la revendication 1 ou 2, dans lequel la touche comprend une touche de silencieux.

4. Procédé selon l'une quelconque des revendications précédentes, dans lequel le niveau de volume sonore prédéterminé est l'absence de son.

5. Procédé selon l'une quelconque des revendications précédentes, dans lequel la période de temps prédéterminée comprend 1 seconde.

6. Procédé selon l'une quelconque des revendications précédentes, dans lequel l'actualisation du niveau de volume sonore au niveau prédéterminé comprend l'affichage d'un message qui indique que le niveau de volume sonore courant mémorisé a été actualisé au niveau prédéterminé.

7. Procédé selon l'une quelconque des revendications précédentes, dans lequel l'actualisation du niveau de volume sonore au niveau prédéterminé comprend l'affichage du niveau prédéterminé comme niveau de volume sonore courant mémorisé sur un écran d'interface utilisateur qui affiche le volume sonore.

8. Procédé selon l'une quelconque des revendications précédentes, dans lequel l'actualisation du niveau de volume sonore courant au niveau prédéterminé est exécuté même si l'appareil de lecture vidéo est hors tension.

9. Procédé selon l'une quelconque des revendications précédentes, dans lequel si l'appareil de lecture vidéo est hors tension, si le signal est reçu continûment pendant au moins la durée prédéterminée, l'appareil est commuté sous tension avec un volume de sortie au niveau actualisé.

10. Appareil de lecture vidéo qui produit en sortie un signal vidéo et un signal audio, l'appareil de lecture vidéo comprenant :
une unité de réception de signal de touche (90) configurée pour recevoir un signal correspondant à une touche ;
une unité de commande (80) configurée pour déterminer si le signal est reçu continûment pendant au moins une période de temps prédéterminée ; et
une unité de sortie audio qui produit en sortie un signal audio, **caractérisé en ce que** l'unité de commande (80) est configurée pour actualiser un niveau de volume sonore courant à un niveau prédéterminé et mémoriser le niveau de volume sonore courant actualisé dans une mémoire (50) s'il est déterminé que le signal est reçu continûment pendant au moins la période de temps prédéterminée et commander l'unité de sortie audio afin de produire en sortie le signal audio au niveau actualisé.

11. Appareil de lecture vidéo selon la revendication 10, dans lequel la touche comprend une touche de silencieux.

12. Appareil de lecture vidéo selon la revendication 10 ou 11, dans lequel le niveau prédéterminé est l'absence de son.

13. Appareil de lecture vidéo selon l'une quelconque des revendications 10 à 12, dans lequel la période de temps prédéterminée est une seconde.

14. Appareil de lecture vidéo selon l'une quelconque des revendications 10 à 13, comprenant en outre une unité d'affichage (30), l'unité de commande (80) commandant l'unité d'affichage (30) de telle sorte que l'unité d'affichage (30) affiche un message qui indique que le niveau de volume sonore courant mémorisé a été actualisé.

15. Appareil de lecture vidéo selon l'une quelconque des revendications 10 à 14, comprenant en outre une unité d'affichage (30), l'unité de commande (80) étant configurée pour commander l'unité d'affichage (30) de telle sorte que l'unité d'affichage (30) affiche le niveau de volume sonore courant mémorisé sur un écran d'interface utilisateur.

16. Appareil de lecture vidéo selon l'une quelconque des revendications 10 à 15, dans lequel l'unité de commande (30) est configurée pour actualiser le niveau de volume sonore courant mémorisé même si l'appareil de lecture vidéo est hors tension.
